# EUROPÄISCHE PATENTSCHRIFT

(11) **EP 2 039 319 B1**
(45) Veröffentlichungstag und Bekanntmachung des Hinweises auf die Patenterteilung: **06.08.2014**
(21) Anmeldenummer: 08008383.5
(22) Anmeldetag: 02.05.2008
(51) Int. Cl.: A61C 8/00

(54) **Dentalimplantat**
Dental implant
Implant dentaire

(30) Priorität: 20.09.2007 DE 102007044852
(43) Veröffentlichungstag der Anmeldung: 25.03.2009
(73) Patentinhaber: Gebr. Brasseler GmbH & Co. KG, 32657 Lemgo (DE)
(72) Erfinder: Krumsiek, Michael, 32657 Lemgo (DE); Danger, Karl-Heinz, 32758 Detmold (DE)
(74) Vertreter: Schmitz, Hans-Werner

(56) Entgegenhaltungen:
- EP-A- 0 180 247
- WO-A-98/36701
- GB-A- 2 063 680

## Beschreibung

Die Erfindung bezieht sich auf ein Dentalimplantat nach den Merkmalen des Oberbegriffs des Anspruchs 1.

Im Einzelnen bezieht sich die Erfindung auf ein zweiteiliges Dentalimplantat, bei welchem nach der Implantation eines enossalen Bereichs ein koronaler Bereich montiert werden kann.

Ganz allgemein sind Dentalimplantate beispielsweise aus der DE 10 2005 032 938 A1 vorbekannt.

Bei Dentalimplantaten ist es wünschenswert, den enossalen Bereich aus einem keramischen Werkstoff zu fertigen oder mit einem keramischen Überzug zu versehen, um eine gute Materialverträglichkeit mit dem Kieferknochen eines Patienten zu erzielen und um die Osseointegration zu verbessern.

Bei zweistückigen oder zweiteiligen Dentalimplantaten besteht die Notwendigkeit, den enossalen Bereich mit dem koronalen Bereich so zu verbinden, dass ein hohes Maß an Funktionstüchtigkeit gewährleistet ist. Üblicherweise erfolgt die Verbindung mittels eines Schraubzapfens oder mittels eines Fügeverfahrens. Hierbei muss die Montage jedoch so möglich sein, dass diese im operativen Umfeld einfach und zuverlässig durchführbar ist.

Aus der EP-A-0 180 247 ist ein enossales Implantat bekannt, bei weichem der enossale Bereich zumindest an seiner Außenseite aus einem keramischen Werkstoff gefertigt ist und bei welchem der enossale Bereich mit einer zentrischen, koaxialen Ausnehmung versehen ist, um ein Einsatzelement zur Befestigung eines koronalen Bereichs zu befestigen. Hierbei erweist es sich als nachteilig, dass Zugkräfte in Axialrichtung das Einsatzelement herausziehen können.

Eine ähnliche koaxiale Konstruktion zeigt die GB-A-2 063 680.

Der Erfindung liegt die Aufgabe zugrunde, ein zweistückiges Dentalimplantat zu schaffen, welches bei einfachem Aufbau und einfacher, kostengünstiger Herstellbarkeit die Nachteile des Standes der Technik vermeidet und insbesondere aus keramischen Werkstoffen hergestellt werden kann.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass der enossale Bereich zumindest an seiner Außenseite mit einem keramischen Werkstoff versehen oder aus diesem gefertigt ist und dass an der dem koronalen Bereich zugewandten Seite des enossalen Bereichs eine Ausnehmung vorgesehen ist, in welcher mittels eines Fügeverfahrens ein separates Einsatzelement befestigt ist. An dem Einsatzelement ist der koronale Bereich befestigbar. Das erfindungsgemäße Dentalimplantat zeichnet sich durch eine Reihe erheblicher Vorteile aus. Durch den zweiteiligen Aufbau des enossalen Bereichs ist es möglich, eine günstige Materialauswahl zu schaffen. So kann beispielsweise der enossale Bereich vollständig aus einem keramischen Werkstoff gefertigt werden. In die Ausnehmung wird erfindungsgemäß dann das separate Einsatzelement gefügt. Dieses kann erfindungsgemäß hinsichtlich seiner Materialauswahl aus einem beliebigen Material gefertigt sein, da das Einsatzelement nicht mit dem Körpergewebe des Patienten in Berührung kommt. So ist es erfindungsgemäß möglich, das separate Einsatzelement aus Titan, Stahl, Kunststoff oder auch aus Keramik, beispielsweise einer anderen Keramik als der enossale Bereich, zu fertigen.

Das hülsenartige Einsatzelement kann bei einer Fertigung aus einem Keramikmaterial beispielsweise aus Aluminiumoxid (Al₂O₃) oder Zirkonoxid (ZrO₂) oder einer Mischkeramik, beispielsweise aus den beiden eben genannten Keramiken, gefertigt sein.

Bei einer Fertigung aus einem Kunststoff kann beispielsweise ein ultrahochmolekulares Polyethylen (UHMWPE) oder ein Polyetheretherketon (PEEK) verwendet werden. Erfindungsgemäß können jedoch auch weitere Kunststoffe eingesetzt werden, die beispielsweise aus dem Bereich der Endoprothetik vorbekannt sind.

Durch die Möglichkeit, das Einsatzelement hinsichtlich der Materialauswahl unabhängig von dem Material des enossalen Bereichs zu gestalten, ist es möglich, ausreichende Materialfestigkeiten vorzusehen, beispielsweise für ein Schraubgewinde zur Befestigung des koronalen Bereichs.

Durch das erfindungsgemäß vorgesehene Fügeverfahren kann das separate Einsatzelement mit einem spaltfreien Verbund mit dem enossalen Bereich gefügt werden, beispielsweise durch ein Klebeverfahren, welches einen adhäsiven Verbund zwischen dem separaten Einsatzelement und dem enossalen Bereich ermöglicht. Zusätzlich ist es erfindungsgemäß möglich, das separate Einsatzelement nicht nur adhäsiv zu befestigen (kraftschlüssig), sondern auch formschlüssig. Hierzu kann es günstig sein, wenn die stirnseitige Ausnehmung des enossalen Bereichs zusätzlich konturiert ist, beispielsweise sechseckig oder mit Kreisbogensegmenten. Hierdurch ergibt sich zusätzlich eine formschlüssige Verankerung, die die Gesamtfestigkeit des fertiggestellten enossalen Bereichs zusätzlich steigert. Erfindungsgemäß ist es in bevorzugter Weiterbildung der Erfindung möglich, in das separate Einsatzelement entweder vor dem Fügen mit dem enossalen Bereich oder nach dem Fügen eine Bohrung oder Ausnehmung einzubringen, welche beispielsweise mittels eines Gewindes versehen ist, um den koronalen Bereich einzuschrauben. Somit können Schrauben, das Abutment, welches zur prothetischen Versorgung benötigt wird, etc., dauerhaft und sicher befestigt werden. Insgesamt ergibt sich somit eine hohe mechanische Festigkeit des Dentalimplantats.

Oben stehend wurde als Beispiel für das erfindungsgemäß vorgesehene Fügeverfahren ein Klebeverfahren genannt. Im Rahmen der Erfindung kann es auch vorteilhaft sein, das Fügen mittels eines Lötverfahrens, eines Laserfügeverfahrens oder eines Pressfügeverfahrens durchzuführen. Es ergibt sich somit jeweils eine stoffschlüssige oder kraftschlüssige Verbindung.

Diese kann durch die oben genannte formschlüssige Verbindung unterstützt werden.

Da das separate Einsatzelement nicht mit dem Knochengewebe des Patienten in Berührung kommt, ist erfindungsgemäß die Möglichkeit geschaffen, den enossalen Bereich aus Keramik zu fertigen oder mit einer Keramik-Außenschicht zu versehen, gleichzeitig jedoch eine hohe mechanische strukturelle Festigkeit zu gewährleisten.

Die äußere Gestaltung des enossalen Bereichs kann in üblicher Weise erfolgen, beispielsweise mittels eines einstufigen oder mehrstufigen Gewindes, um den enossalen Bereich in eine Implantatbohrung des Kieferknochens des Patienten einzuschrauben.

Die axiale Länge des separaten Einsatzelements kann erfindungsgemäß ebenfalls in weitem Rahmen variiert werden, ebenso wie die Durchmesserverhältnisse zwischen dem Außendurchmesser des separaten Einsatzelements und dem Außendurchmesser des enossalen Bereichs.

Erfindungsgemäß kann das Dentalimplantat wie folgt ausgebildet und beschrieben werden:

Dentalimplantat mit einem enossalen Bereich, an welchem ein koronaler Bereich befestigbar ist, wobei der enossale Bereich zumindest an seiner Außenseite aus einem keramischen Werkstoff gefertigt ist und an seiner dem koronalen Bereich zugewandten Seite mit einer Ausnehmung versehen ist, in welcher mittels eines Fügeverfahrens ein separates Einsatzelement befestigt ist, an welchem der koronale Bereich befestigbar ist, wobei die Ausnehmung zur Aufnahme des Einsatzelements, bezogen auf eine Mittelachse des enossalen Bereichs in einem Winkel ungleich Null angeordnet ist, wobei insbesondere
- das Einsatzelement mittels eines Klebeverfahrens mit dem enossalen Bereich verbunden ist,
- das Einsatzelement mittels eines Lötverfahrens mit dem enossalen Bereich verbunden ist,
- das Einsatzelement mittels eines Laserfügeverfahrens mit dem enossalen Bereich verbunden ist,
- das Einsatzelement mittels eines Pressfügeverfahrens mit dem enossalen Bereich verbunden ist,
- die Ausnehmung zur Aufnahme des Einsatzelements horizontal zu einer Mittelachse ) versetzt ist,
- die Wandung der Ausnehmung und/oder die Außenkontur des Einsatzelementes mit zumindest einer Nut versehen sind,
- die Ausnehmung mit einem runden Querschnitt versehen ist,
- die Ausnehmung mit einem konturierten Querschnitt versehen ist,
- die Ausnehmung mit einem über ihre Länge gleich bleibenden Querschnitt versehen ist,
- die Ausnehmung über ihre Länge mit einem zum freien Ende sich erweiternden Querschnitt versehen ist,
- das Einsatzelement an seinem Endbereich mit einem Flanschbereich versehen ist, welcher gegen den stirnseitigen Bereich des enossalen Bereichs sowie gegen einen Randbereich eines Abutments anliegt,
- das Einsatzelement und der enossale Bereich in einem spaltfreien Verbund gefügt sind,
- das Einsatzelement aus dem gleichen Werkstoff gefertigt ist, wie der enossale Bereich,
- das Einsatzelement aus einem unterschiedlichen Werkstoff gefertigt ist, wie der enossale Bereich,
- das hülsenartige Einsatzelement aus einem Kunststoffmaterial gefertigt ist, insbesondere einem ultrahochmolekularen Polyethylen oder einem Polyetheretherketon,
- der enossale Bereich aus einem keramischen Werkstoff gefertigt ist,
- das Einsatzelement mit einer zentrischen Ausnehmung versehen ist,
- die Ausnehmung in Form einer Gewindeausnehmung ausgebildet ist,
- die Ausnehmung vor dem Fügen des Einsatzelements und des enossalen Bereichs hergestellt ist,
- die Ausnehmung nach dem Fügen des Einsatzelements und des enossalen Bereichs gefertigt ist,

Im Folgenden wird die Erfindung anhand eines Ausführungsbeispiels in Verbindung mit der Zeichnung beschrieben. Dabei zeigt:
- Fig. 1: eine Schnittansicht eines Ausführungsbeispiels des enossalen Bereichs, welches nicht Teil des beanspruchten Gegenstands ist,
- Fig. 2: eine Vergrößerung des Details Y gemäß Fig. 1,
- Fig. 3-5: unterschiedliche Ausgestaltungsvarianten des Details Z gemäß Fig. 1,
- Fig. 6-8: vereinfachte stirnseitige Konturansichten in Blickrichtung des Pfeils A von Fig. 1 auf die Kontur der Ausnehmung des enossalen Bereichs,
- Fig. 9-12: jeweils Axialschnitte bzw. stirnseitige Ansichten zweier Ausführungsformen der Erfindung,
- Fig. 13 und 14: weitere Ausführungsbeispiele analog der Fig. 1,
- Fig. 15-17: weitere Detailansichten von Ausführungsbeispielen analog den Fig. 3-5, und
- Fig. 18: eine perspektivische Ansicht eines Dentalimplantats gemäß dem Stand der Technik.

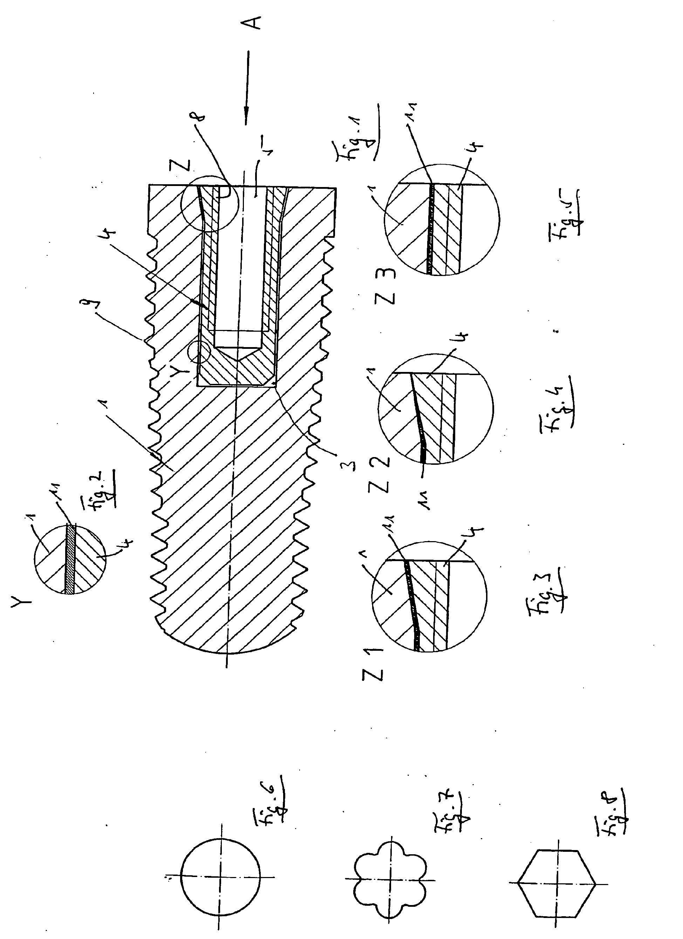

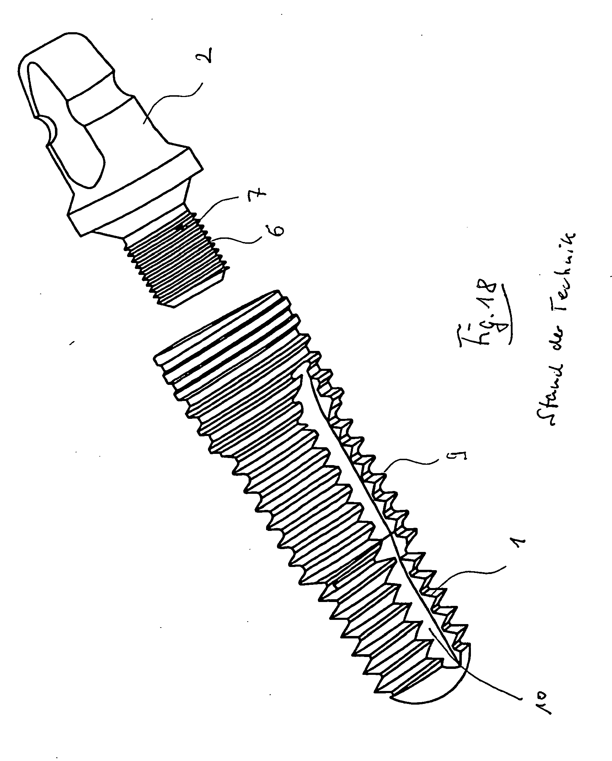

Die Fig. 18 zeigt ein zweiteiliges Dentalimplantat mit einem enossalen Bereich 1 sowie einem koronalen Bereich 2. Der koronale Bereich 2 weist einen Gewindeansatz 6 mit einem Außengewinde 7 auf. Das Außengewinde 7 ist in ein Innengewinde 8 einer zentrischen Ausnehmung 5 des enossalen Bereichs 1 (siehe Darstellung gemäß Fig. 1) einschraubbar.

Der enossale Bereich 1 ist mit einem Außengewinde 9 versehen, welches beispielsweise dreistufig ausgebildet sein kann, so wie dies der Stand der Technik zeigt. Weiterhin kann eine Spannut 10 vorgesehen sein, welche das Einschrauben des enossalen Bereichs 1 in eine Implantatbohrung eines Kieferknochens erleichtert.

Die Fig. 1 zeigt ein erstes Ausführungsbeispiel eines enossalen Bereichs 1 in axialer Längsansicht. Der enossale Bereich 1 ist dabei aus einem keramischen Werkstoff gefertigt und weist eine zentrische Ausnehmung 3 (Sacklochbohrung) auf. In diese ist mittels eines Fügeverfahrens (Fügeschicht/Klebschicht 11) ein bei dem gezeigten Ausführungsbeispiel im Wesentlichen zylindrisches Einsatzelement 4 spaltfrei eingeklebt. Das Fügen des Einsatzelements 4 erfolgt bei der Produktion des enossalen Bereichs 1, so dass der Zahnarzt im Operationsfeld bereits den fertigmontierten enossalen Bereich 1 zur Verfügung hat.

Das Einsatzelement 4 ist mit einer im Wesentlichen zylindrischen Ausnehmung 5 versehen, welche mit dem Innengewinde 8 versehen ist, welches zur Befestigung des koronalen Bereichs 2 dient.

Die Fig. 2 zeigt das Detail Y in vergrößerter Ansicht.

Die Fig. 3-5 zeigen unterschiedliche Ausgestaltungsvarianten des Details Z gemäß Fig. 1. Dabei ist ersichtlich, dass sowohl die Ausnehmung 3 als auch das Einsatzelement 5 vollständig zylindrisch ausgebildet sein können (Fig. 5). Es ist jedoch auch möglich, diese zum freien Endbereich hin konisch zu erweitern, entweder in paralleler Konizität (Fig. 3) oder in unterschiedlicher Konizität (Fig. 4). Bei dem Ausführungsbeispiel der Fig. 4 ergibt sich ein nur minimalster Fügespalt zur stirnseitigen Außenfläche des enossalen Bereichs 1. Die Fig. 6-8 zeigen jeweils stirnseitige vereinfachte

Darstellungen in Blickrichtung des Pfeils A von Fig. 1, in welchen die mögliche Kontur des Querschnitts der Ausnehmung 3 sowie des Einsatzelements 4 dargestellt ist.

Die Fig. 6 zeigt eine rein zylindrische Ausgestaltung sowohl der Ausnehmung 3 als auch des Einsatzelements 4. Die Fig. 7 und 8 zeigen jeweils konturierte Ausgestaltungen, bei welchen zusätzlich zu der formschlüssigen Verbindung mittels der Fügeschicht 11 eine kraftschlüssige Verankerung vorgesehen ist, welche einer Drehbewegung um die zentrische Achse entgegenwirkt.

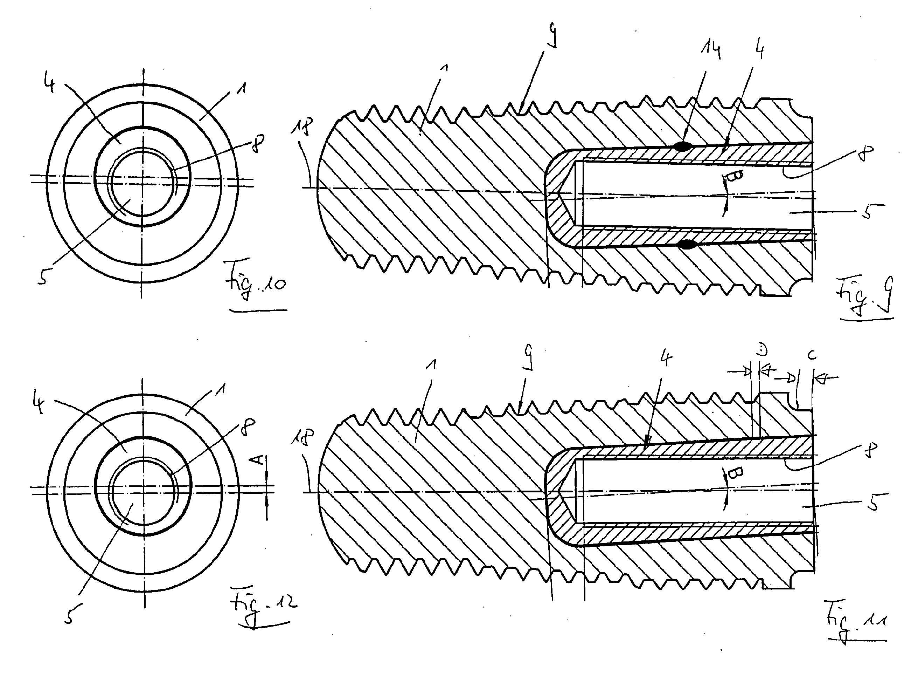

Die Fig. 9 und 11 zeigen zwei Ausführungsformen in Schnittansicht analog Fig. 1 sowie in stirnseitiger Ansicht. Die Ausgestaltungsvarianten unterscheiden sich darin, dass die Ausnehmung 3 horizontal oder diagonal versetzt sein kann. Dies bringt den Vorteil, dass das Einsatzelement 4 zusätzlich hinsichtlich Rotation und axiale Lockerung gesichert ist. Um die axiale Sicherung und Fixierung zu verbessern, ist es besonders vorteilhaft, wenn die axiale Flankenlänge D des Außengewindes 9 kleiner ist, als die axiale Länge C des beispielsweise als Mehrkant oder Stufe oder konkave Präparation ausgebildeten Bereichs (siehe Fig. 11).

Wie in Fig. 9 gezeigt, kann zur zusätzlichen Sicherung des Einsatzelementes 4 ein umlaufender Freistich 14 vorgesehen sein, welcher als Nut/Ringnut ausgebildet ist. Dieser Freistich 14, welcher sowohl an dem enossalen Bereich 1 (Innenwandung der Ausnehmung 3) als auch an dem Außenumfang des Einsatzelements 4 ausgebildet sein kann, wir im Fügeprozess mit Fügematerial (beispielsweise Komposit) gefüllt und verankert nach dem Aushärten das Einsatzelement 4 zusätzlich in der Ausnehmung 3.

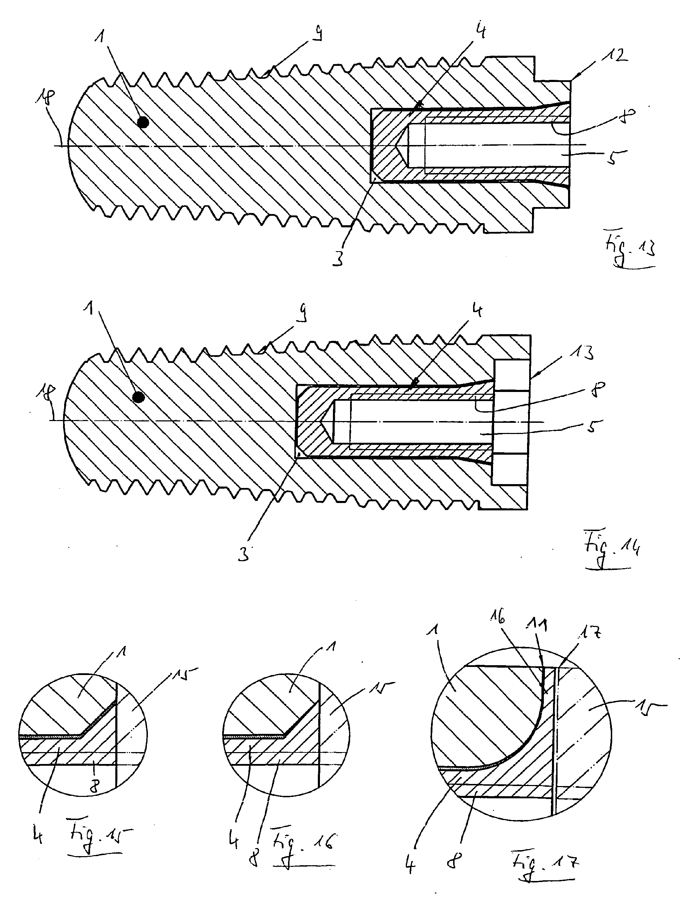

Die Fig. 13 und 14 zeigen weitere Ausgestaltungsvarianten, analog Fig. 1. Dabei ist gemäß Fig. 13 ein Außensechskant 12 vorgesehen, während gemäß Fig. 14 ein Innensechskant 13 ausgebildet ist. Es können auch andere formschlüssige Eingriffsflächen für Werkzeuge vorgesehen sein.

Die Fig. 15 und 16 zeigen weitere Ausgestaltungsvarianten analog den Fig. 3 und 4, wobei zusätzlich in schematischer Weise der Randbereich eines Abutments 15 dargestellt ist.

Die Fig. 17 zeigt eine weitere Ausführungsvariante, bei welcher das Einsatzelement 4 so ausgebildet ist, dass das Material des Einsatzelements 4 einen Flanschbereich 16 bildet, der beispielsweise aus Titan besteht und sich in radialer Richtung über den enossalen Bereich 1 erstreckt. Das Bezugszeichen 11 zeigt wieder die Fügeschicht. Der Flanschbereich 16 bildet somit eine "Dämpfungsschicht" zwischen dem enossalen Keramikimplantat (enossaler Bereich 1) und dem keramischen Abutment 15 und entlastet bei Biegewechselbelastung den keramischen Randbereich 17 des Abutments 15 bzw. des enossalen Bereichs 1.

### Bezugszeichenliste

- 1: Enossaler Bereich
- 2: Koronaler Bereich
- 3: Ausnehmung
- 4: Einsatzelement
- 5: Ausnehmung
- 6: Gewindeansatz
- 7: Außengewinde
- 8: Innengewinde
- 9: Außengewinde
- 10: Spannut
- 11: Fügeschicht
- 12: Außensechskant
- 13: Innensechskant
- 14: Freistich/Nut
- 15: Abutment
- 16: Flanschbereich
- 17: Randbereich
- 18: Mittelachse

## Patentansprüche

1. Dentalimplantat mit einem enossalen Bereich (1), an welchem ein koronaler Bereich (2) befestigbar ist, wobei der enossale Bereich (1) zumindest an seiner Außenseite aus einem keramischen Werkstoff gefertigt ist und an seiner dem koronalen Bereich (2) zugewandten Seite mit einer Ausnehmung (3) versehen ist, in welcher mittels eines Fügeverfahrens ein separates Einsatzelement (4) befestigt ist, an welchem der koronale Bereich (2) befestigbar ist, **dadurch gekennzeichnet, dass** die Ausnehmung (3) zur Aufnahme des Einsatzelements (4), bezogen auf eine Mittelachse (18) des enossalen Bereichs (1) in einem Winkel (B) ungleich Null angeordnet ist.

2. Dentalimplantat nach Anspruch 1, **dadurch gekennzeichnet, dass** das Einsatzelement mittels eines Klebeverfahrens mit dem enossalen Bereich (1) verbunden ist.

3. Dentalimplantat nach Anspruch 1 oder 2, **dadurch gekennzeichnet, dass** die Wandung der Ausnehmung (3) und/oder die Außenkontur des Einsatzelementes (4) mit zumindest einer Nut versehen sind.

4. Dentalimplantat nach einem der Ansprüche 1 bis 3, **dadurch gekennzeichnet, dass** das Einsatzelement an seinem Endbereich mit einem Flanschbereich (16) versehen ist, welcher gegen den stirnseitigen Bereich des enossalen Bereichs (1) sowie gegen einen Randbereich (17) eines Abutments (15) anliegt.

5. Dentalimplantat nach einem der Ansprüche 1 bis 4, **dadurch gekennzeichnet, dass** das Einsatzelement (4) und der enossale Bereich in einem spaltfreien Verbund gefügt sind.

6. Dentalimplantat nach einem der Ansprüche 1 bis 5, **dadurch gekennzeichnet, dass** das Einsatzelement (4) aus dem gleichen Werkstoff gefertigt ist, wie der enossale Bereich (1).

7. Dentalimplantat nach einem der Ansprüche 1 bis 6, **dadurch gekennzeichnet, dass** das Einsatzelement (4) aus einem unterschiedlichen Werkstoff gefertigt ist, wie der enossale Bereich (1).

8. Dentalimplantat nach Anspruch 7, **dadurch gekennzeichnet, dass** das Einsatzelement (4) aus einem Kunststoffmaterial gefertigt ist.

9. Dentalimplantat nach Anspruch 7, **dadurch gekennzeichnet, dass** das Einsatzelement (4) aus Titan gefertigt ist.

10. Dentalimplantat nach einem der Ansprüche 1 bis 9, **dadurch gekennzeichnet, dass** das Einsatzelement (4) mit einer zentrischen Ausnehmung (5) versehen ist.

11. Dentalimplantat nach einem der Ansprüche 1 bis 10, **dadurch gekennzeichnet, dass** die Ausnehmung (3) mit einem runden Querschnitt versehen ist.

12. Dentalimplantat nach einem der Ansprüche 1 bis 11, **dadurch gekennzeichnet, dass** die Ausnehmung (3) mit einem konturierten Querschnitt versehen ist.

## Claims

1. A dental implant having an enossal portion (1) to which a coronal portion (2) can be fastened, the enossal portion (1) being made at least on its outside from a ceramic material and being provided at its side facing the coronal portion (2) with a recess (3) in which a separate insertion element (4) to which the coronal portion (2) can be fastened is fastened by using a joining process, **characterized in that** the recess (3) for receiving the insertion element (4) is arranged, based on a center axis (18) of the enossal portion (1), at an angle (B) not equal to zero.

2. The dental implant according to claim 1, **characterized in that** the insertion element is connected to the enossal portion (1) by using an adhesive bonding process.

3. The dental implant according to claim 1 or 2, **characterized in that** the wall of the recess (3) and/or the outer contour of the insertion element (4) is provided with at least one groove.

4. The dental implant according to any one of claims 1 to 3, **characterized in that** the insertion element is provided on its end portion with a flange portion (16) which abuts on the face-side portion of the enossal portion (1) and on an edge portion (17) of an abutment (15).

5. The dental implant according to any one of claims 1 to 4, **characterized in that** the insertion element (4) and the enossal portion are joined in a gap-free bond.

6. The dental implant according to any one of claims 1 to 5, **characterized in that** the insertion element (4) is made from the same material as the enossal portion (1).

7. The dental implant according to any one of claims 1 to 6, **characterized in that** the insertion element (4) is made from a material differing from that of the enossal portion (1).

8. The dental implant according to claim 7, **characterized in that** the insertion element (4) is made from a plastic material.

9. The dental implant according to claim 7, **characterized in that** the insertion element (4) is made from titanium.

10. The dental implant according to any one of claims 1 to 9, **characterized in that** the insertion element (4) is provided with a centric recess (5).

11. The dental implant according to any one of claims 1 to 10, **characterized in that** the recess (3) is provided with a round cross-section.

12. The dental implant according to any one of claims 1 to 11, **characterized in that** the recess (3) is provided with a contoured cross-section.

## Revendications

1. Implant dentaire, avec une région endo-osseuse (1) sur laquelle une région coronaire (2) peut être fixée, sachant que la région endo-osseuse (1) est fabriquée au moins sur son côté extérieur en un matériau céramique et est dotée, sur son côté tourné vers la région coronaire (2), d'un évidement (3) dans lequel est fixé, au moyen d'un procédé d'assemblage, un élément d'insertion séparé (4) sur lequel la région coronaire (2) peut être fixée, **caractérisé en ce que** l'évidement (3) destiné à recevoir l'élément d'insertion (4) est disposé, par rapport à un axe médian (18) de la région endo-osseuse (1), sous un angle (B) différent de zéro.

2. Implant dentaire selon la revendication 1, **caractérisé en ce que** l'élément d'insertion est assemblé à la région endo-osseuse (1) au moyen d'un procédé de collage.

3. Implant dentaire selon la revendication 1 ou 2, **caractérisé en ce que** la paroi de l'évidement (3) et/ou le contour extérieur de l'élément d'insertion (4) sont pourvus d'au moins une rainure.

4. Implant dentaire selon l'une des revendications 1 à 3, **caractérisé en ce que** l'élément d'insertion est pourvu dans sa région terminale d'une région de bridage (16) qui s'applique contre la région frontale de la région endo-osseuse (1) ainsi que contre une région de bord (17) d'un pilier (15).

5. Implant dentaire selon l'une des revendications 1 à 4, **caractérisé en ce que** l'élément d'insertion (4) et la région endo-osseuse sont assemblés en un assemblage sans interstice.

6. Implant dentaire selon l'une des revendications 1 à 5, **caractérisé en ce que** l'élément d'insertion (4) est fabriqué dans le même matériau que la région endo-osseuse (1).

7. Implant dentaire selon l'une des revendications 1 à 6, **caractérisé en ce que** l'élément d'insertion (4) est fabriqué dans un matériau différent de la région endo-osseuse (1).

8. Implant dentaire selon la revendication 7, **caractérisé en ce que** l'élément d'insertion (4) est fabriqué en matière plastique.

9. Implant dentaire selon la revendication 7, **caractérisé en ce que** l'élément d'insertion (4) est fabriqué en titane.

10. Implant dentaire selon l'une des revendications 1 à 9, **caractérisé en ce que** l'élément d'insertion (4) est pourvu d'un évidement centré (5).

11. Implant dentaire selon l'une des revendications 1 à 10, **caractérisé en ce que** l'évidement (3) est doté d'une section ronde.

12. Implant dentaire selon l'une des revendications 1 à 11, **caractérisé en ce que** l'évidement (3) est doté d'une section profilée.
